# FASCICULE DE BREVET EUROPEEN

(11) **EP 2 867 098 B1**
(45) Date de publication et mention de la délivrance du brevet: **23.11.2016**
(21) Numéro de dépôt: 13744633.2
(22) Date de dépôt: 26.06.2013
(51) Int. Cl.: B62D 25/16, B60R 19/24

(54) **PIECE DE FIXATION D'UN BOUCLIER A UN ELEMENT DE CARROSSERIE D'UN VEHICULE AUTOMOBILE**
HALTERUNG ZUM FÜGEN EINES STOSSFÄNGERHAUT AN EINES FAHRZEUGBAUTEIL
FASTENING DEVICE FOR JOINING THE SIDE END OF A BUMPER SKIRT TO A VEHICLE BODY PANEL

(30) Priorité: 28.06.2012 FR 1256145
(43) Date de publication de la demande: 06.05.2015
(73) Titulaire: Renault S.A.S., 92100 Boulogne-Billancourt (FR)
(72) Inventeur: PEROT, Patrick, F-78960 Voisins Le Bretonneux (FR); PERREUX, Philippe, F-L'etang La Vill 78620 (FR); MICHAUD, Herve, F-28000 Chartres (FR); GUERLIN, Philippe, F-91540 Mennecy (FR)
(86) Numéro de dépôt international: PCT/FR2013/051489
(87) Numéro de publication internationale: WO 2014/001715

(56) Documents cités:
- EP-A1- 1 619 082
- DE-A1- 10 143 607
- DE-A1- 10 147 621

## Description

L'invention concerne une pièce de fixation d'un bouclier à un élément de carrosserie de véhicule automobile.

La liaison entre le bouclier et un élément de carrosserie adjacent d'un véhicule automobile peut être réalisée au moyen d'une pièce de fixation sur laquelle est clippé un bord du bouclier, lequel doit être positionné de manière adjacente à l'élément de carrosserie, avec un jeu le plus faible possible pour l'obtention d'une bonne finition.

Cet élément de carrosserie peut être un élément de référence de la carrosserie tel qu'un côté de caisse, encore appelé aile arrière du véhicule, contre lequel le bouclier arrière est plaqué ou tel qu'une aile avant contre laquelle le bouclier avant est plaqué.

La pièce de fixation, généralement réalisée en matériau polymère, est solidarisée à une partie cachée de l'élément de carrosserie, située derrière le bouclier. Le clippage du bouclier sur la pièce de fixation est réalisé suivant une direction sensiblement verticale lorsque le bouclier est monté sur le véhicule, le bord clippé du bouclier étant un bord situé le long de l'élément de carrosserie. La solidarisation de la pièce de fixation à l'élément de la carrosserie étant réalisée suivant une direction perpendiculaire à une paroi sensiblement verticale du bouclier par des moyens de fixation de type rivet, vis ou tout autre moyen adapté.

Toutefois, cette pièce de fixation ne permet pas de réaliser un rattrapage du jeu pouvant exister entre le bord clippé du bouclier et l'élément de carrosserie adjacent, en particulier suivant la direction de clippage du bouclier sur la pièce de fixation, ce qui rend difficile l'obtention d'une bonne qualité d'accostage et de finition de la liaison visible bouclier - élément de carrosserie.

Les documents DE 101 43 607 A1, qui dévoile le préambule de la revendciation 1, et EP 1 619 082 A1 décrivent des agencements de fixation comprenant une pièce de fixation d'un bouclier à un élément de carrosserie d'un véhicule automobile, la pièce de fixation comprenant un élément coulissant parallèlement à une paroi de l'élément de carrosserie, entre une position de montage et une position de blocage mettant en contrainte le bouclier par rapport à l'élément de carrosserie.

L'invention vise à pallier ces inconvénients et/ou à améliorer les agencements de fixation connus en proposant un agencement comprenant une pièce de fixation d'un bouclier sur un élément de carrosserie adjacent qui permette d'obtenir un jeu nul entre le bouclier et l'élément de carrosserie adjacent suivant la direction de clippage, par compensation des écarts de jeu entre ces pièces et qui permette d'obtenir une bonne qualité d'accostage bouclier / élément de carrosserie.

A cet effet, l'objet de l'invention concerne une pièce de fixation d'un bouclier à un élément de carrosserie d'un véhicule automobile, la pièce de fixation comprenant une paroi conformée pour épouser une paroi correspondante du bouclier et un rebord longitudinal s'étendant sensiblement perpendiculairement à la paroi le long d'un bord longitudinal de celle-ci et destiné à être solidarisé, notamment par clippage, à un rebord correspondant du bouclier, caractérisée en ce qu'elle comprend un élément coulissant suivant une direction parallèle au bord longitudinal de la paroi, cet élément coulissant étant disposé sous le rebord longitudinal et maintenu par des éléments de maintien solidaires de la paroi de manière à pouvoir coulisser entre au moins deux positions prédéterminées dont une position de montage et une position de blocage, l'élément coulissant comportant des butées disposées en regard du rebord longitudinal, en ce que le rebord longitudinal comporte des protubérances sur une face opposée à sa face située en regard de l'élément coulissant, et en ce que l'élément coulissant et les butées sont agencés de sorte que :
- lorsque l'élément coulissant est dans la position de blocage, les butées soient situées sous le rebord longitudinal, en appui contre celui-ci et en dessous des protubérances du rebord longitudinal,
- lorsque l'élément coulissant passe de la position de montage à la position de blocage, les butées de l'élément coulissant déplacent le rebord et ses protubérances d'une distance prédéterminée suivant une direction perpendiculaire au rebord longitudinal.

Une telle pièce de fixation est disposée en appui contre le bouclier, sa paroi étant en appui contre une paroi correspondante du bouclier et son rebord longitudinal supportant un rebord correspondant du bouclier. Elle est généralement fixée à l'élément de carrosserie suivant une direction perpendiculaire à sa paroi par des moyens de fixation tels que des rivets aveugles (rivets pop), des vis ou tout autre moyen adapté. Le rebord du bouclier est quant à lui généralement fixé au rebord longitudinal de la pièce de fixation par des moyens de clippage, la direction de clippage étant sensiblement perpendiculaire aux rebords.

Avantageusement, la position de montage est une position de montage/démontage, dans laquelle le bouclier peut être monté sur/démonté de/ l'élément de carrosserie.

L'agencement particulier de la pièce de fixation selon l'invention permet de rattraper un jeu existant entre le rebord du bouclier et l'élément de carrosserie adjacent suivant une direction perpendiculaire au rebord longitudinal de la pièce de fixation, du fait de la poussée exercée par les butées de l'élément coulissant sur les languettes équipées de protubérances du rebord longitudinal de la pièce de fixation et de la présence de protubérances au niveau des points de pression des butées. Le rattrapage de jeu peut être amélioré par montage de chaque butée de l'élément coulissant sur un élément ressort. Les protubérances exercent également une pression contre le rebord du bouclier suivant une direction perpendiculaire au rebord de sorte que le rebord du bouclier peut être rapproché de l'élément de carrosserie adjacent suivant cette direction perpendiculaire aux rebords permettant de rattraper un jeu existant. La liaison entre le rebord longitudinal de la pièce de fixation et le rebord du bouclier est de plus renforcée du fait de la pression exercée par l'élément coulissant. Il est ainsi possible de réaliser une pièce de fixation dont le rebord longitudinal présente une raideur moindre par rapport aux pièces de fixation antérieures, ce qui peut permettre un gain d'effort lors du montage. La pression exercée par l'élément coulissant dans la position de blocage permet également d'améliorer la fixation entre la pièce de fixation et le bouclier par rapport aux pièces de fixation connues.

L'agencement particulier de l'invention présente également l'avantage de ne pas nécessiter de modification des boucliers ou éléments de carrosserie adjacents.

Enfin, la pièce de fixation selon l'invention peut être montée, éventuellement démontée, avec un risque faible de dégradation, le montage, éventuellement le démontage, pouvant être effectué dans la position de montage, alors que l'élément coulissant n'est pas dans une position de blocage, le rebord longitudinal de la pièce de fixation n'étant alors pas contraint par l'élément de coulissant. Par ailleurs, la pièce de fixation selon l'invention permet également de faciliter le montage, éventuellement le démontage, de la pièce de fixation, par déplacement de l'élément coulissant de la position de blocage à la position de montage.

Les butées de l'élément coulissant sont ainsi agencées de manière à déplacer les protubérances du rebord longitudinal d'une distance prédéterminée suivant une direction perpendiculaire au rebord longitudinal lorsque l'élément coulissant passe d'une position prédéterminée à la position de blocage.

Cette distance prédéterminée sera de préférence suffisante pour combler un jeu maximal pouvant exister entre le rebord du bouclier et l'élément de carrosserie adjacent suivant une direction perpendiculaire au rebord. Cette distance prédéterminée peut être calculée pour correspondre au jeu maximal pouvant exister entre le rebord du bouclier et l'élément de carrosserie adjacent suivant une direction perpendiculaire au rebord. La distance peut notamment être de l'ordre de 1 à 10 mm, généralement de 1 à 5 mm, voire de 1 à 2 mm.

Avantageusement et de manière non limitative, pour un bon rattrapage du jeu, les butées peuvent être réparties sur toute la longueur du rebord longitudinal, de préférence régulièrement.

Avantageusement et de manière non limitative, également pour un bon rattrapage de jeu, l'intervalle entre deux butées adjacentes peut être de 30 à 80mm, voire de 45 à 65mm ou de 50 à 60mm.

Avantageusement et de manière non limitative, les protubérances sont situées sur des languettes solidaires du rebord longitudinal. Cet agencement permet de réduire les contraintes exercées sur le rebord longitudinal au niveau des protubérances, des languettes présentant une élasticité du fait de leur liaison au rebord par uniquement une de leurs extrémités. Ainsi, dans la position de blocage, ces languettes peuvent être soulevées sous l'action des butées de l'élément coulissant, ce qui peut améliorer le plaquage du bouclier contre l'élément de carrosserie adjacent. En outre, dans une position de l'élément coulissant autre que la position de blocage, telle que la position de montage, l'élasticité des languettes facilitent la mise en place de la pièce de fixation contre le bouclier en limitant sensiblement les efforts de montage et réduisant les risques de dégradation de la pièce de fixation lors des éventuelles opérations de démontage.

Ces languettes subissant des efforts lors du déplacement de l'élément coulissant, il peut être avantageux qu'elles s'étendent parallèlement à la direction de coulissement.

Il peut également être avantageux que chaque protubérance soit située au niveau de l'extrémité libre d'une languette.

Avantageusement et de manière non limitative, le rebord longitudinal de la pièce de fixation comporte des découpes définissant des languettes comprenant au moins une saillie conformée pour venir en prise avec un orifice correspondant du bouclier et l'élément coulissant comporte des butées secondaires disposées en regard du rebord, l'élément coulissant et les butées secondaires étant agencés de sorte que, dans la position de blocage, les butées secondaires soient situées sous les languettes du rebord longitudinal équipées de saillies, en appui contre ces languettes, afin de bloquer tout déplacement de ces languettes en direction de l'élément coulissant. Un tel agencement participe au blocage et au verrouillage du rebord du bouclier sur la pièce de fixation. Ces saillies sont situées sur une face du rebord longitudinal de la pièce de fixation opposée à sa face située en regard de l'élément coulissant.

Avantageusement et de manière non limitative, les butées de l'élément coulissant, à savoir les premières butées mentionnées et les butées secondaires, sont situées sur des languettes solidaires de l'élément coulissant. Cet agencement permet de réduire les contraintes exercées sur l'élément coulissant du fait de l'élasticité des languettes inhérente à leur forme. Ces languettes subissant des efforts lors du déplacement de l'élément coulissant, il peut être avantageux qu'elles s'étendent parallèlement à la direction de coulissement, ce qui permet également de limiter l'encombrement de l'élément coulissant perpendiculairement à la paroi de la pièce de fixation.

L'élément coulissant peut être disposé sur une face de la paroi destinée à être disposée contre le bouclier, la paroi peut alors comporter au moins une dépression conformée pour loger l'élément coulissant, notamment quelque soit la position de ce dernier. Ce dernier affleure ainsi le reste de la paroi de la pièce de fixation et cette dernière peut être appliquée contre une paroi correspondante du bouclier. Un tel positionnement peut favoriser le coulissement de l'élément coulissant, le logement et la paroi du bouclier adjacente pouvant participer au guidage de l'élément coulissant.

Avantageusement et de manière non limitative, la pièce de fixation comprend, sur un rebord latéral sensiblement perpendiculaire à la paroi et sensiblement perpendiculaire au rebord longitudinal, une vis s'étendant parallèlement à la direction de déplacement de l'élément coulissant et dont l'extrémité est engagée dans une partie formant écrou solidaire de l'élément coulissant, de sorte que la rotation de la vis provoque le coulissement de l'élément coulissant, notamment entre ses positions de montage et de blocage. Un tel agencement permet de faire coulisser l'élément coulissant tout en le maintenant fixé à la pièce de fixation, en particulier même lorsque l'élément de coulissement n'est pas accessible. La position de blocage peut correspondre à une position finale de vissage de la vis, notamment une position dans laquelle la vis est en butée, par exemple contre l'élément coulissant, ce qui permet de manière simple d'être certain que la position de blocage est atteinte. En outre, l'utilisation d'un système vis-écrou pour déplacer l'élément coulissant présente l'avantage d'éviter tout déplacement non voulu de l'élément coulissant.

Avantageusement et de manière non limitative, la vis et la partie formant écrou solidaire de l'élément coulissant sont en métal pour une bonne résistance.

La vis utilisée peut comporter un pas millimétrique, ce qui permet d'exercer une grande traction pour un couple relativement faible. La partie formant écrou peut être un écrou, une agrafe ou un insert métallique pourvu d'un filetage complémentaire du pas de la vis.

Selon l'invention, l'élément coulissant est formé d'une pluralité de caissons de forme sensiblement parallélépipédique reliés par des éléments de liaison rectilignes et les éléments de maintien de la paroi sont conformés pour maintenir chaque élément rectiligne entre lesdites au moins deux positions prédéterminées de l'élément coulissant. L'élément coulissant présente ainsi une forme générale similaire à des wagons reliés. Cet agencement présente l'avantage de faciliter la mise en forme de l'élément coulissant. Ce dernier est en effet plaqué contre la paroi de la pièce de fixation et en épouse la forme, laquelle peut être galbée. Les éléments de liaison peuvent en outre être conformés pour présenter une souplesse suffisante pour mettre en forme de l'élément coulissant suivant le galbe du bord longitudinal de la pièce de fixation, facilitant ainsi la mise en forme de l'élément coulissant. Selon l'invention, l'élément coulissant peut être formé d'une pluralité de caissons de forme sensiblement parallélépipédique reliés par des éléments de liaison rectilignes suffisamment souples pour admettre des variations de courbures du bord longitudinal. Cette souplesse peut être obtenue par la réalisation d'éléments de liaison dont la section transversale présente une forme et des dimensions adaptées, par exemple des dimensions inférieures à celles de la section des caissons, ces éléments de liaison présentant une hauteur et une épaisseur inférieures à celles des caissons.

Par exemple, chaque caisson peut être un caisson creux dont la face opposée à la face en appui contre la paroi de la pièce de fixation est ouverte.

La pièce de fixation selon l'invention peut être avantageusement réalisée, de préférence d'une pièce, en matériau polymère. De même, l'élément coulissant peut être avantageusement réalisé, de préférence d'une pièce, en matériau polymère.

L'invention est maintenant décrite en référence aux dessins annexés, non limitatifs, dans lesquels :
- la figure 1 est une vue en perspective d'une partie d'un bouclier maintenu par une pièce de fixation selon l'invention,
- la figure 2 est une vue en perspective de l'ensemble représenté figure 1, du côté du bouclier, ce dernier étant représenté en transparence ;
- la figure 3 est une vue agrandie d'une partie de la pièce de fixation des figures 1 et 2 ;
- la figure 4 montre l'élément coulissant de la pièce de fixation représentée sur les figures 1 et 2 dans une position de blocage de la pièce de fixation,
- la figure 5 est une vue en coupe de la figure 4 selon la ligne A-A, sur laquelle l'élément de carrosserie adjacent est également représentée.

Dans le présent texte, les directions et orientations sont indiquées en référence au repère classique XYZ du véhicule, dans lequel X désigne la direction longitudinale avant-arrière du véhicule, dirigée vers l'arrière, Y la direction transversale au véhicule, dirigé vers la droite et Z la direction verticale dirigée vers le haut.

Par sensiblement horizontal, longitudinal ou vertical, on entend une direction, respectivement un plan, formant un angle d'au plus ±20°, voire d'au plus ±10° avec une direction, respectivement un plan, horizontal, longitudinal ou vertical.

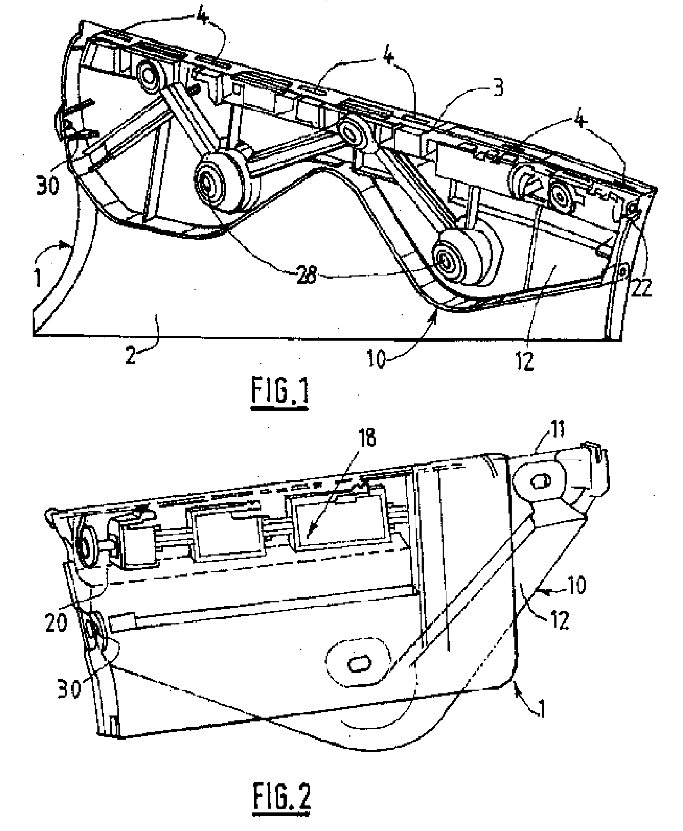

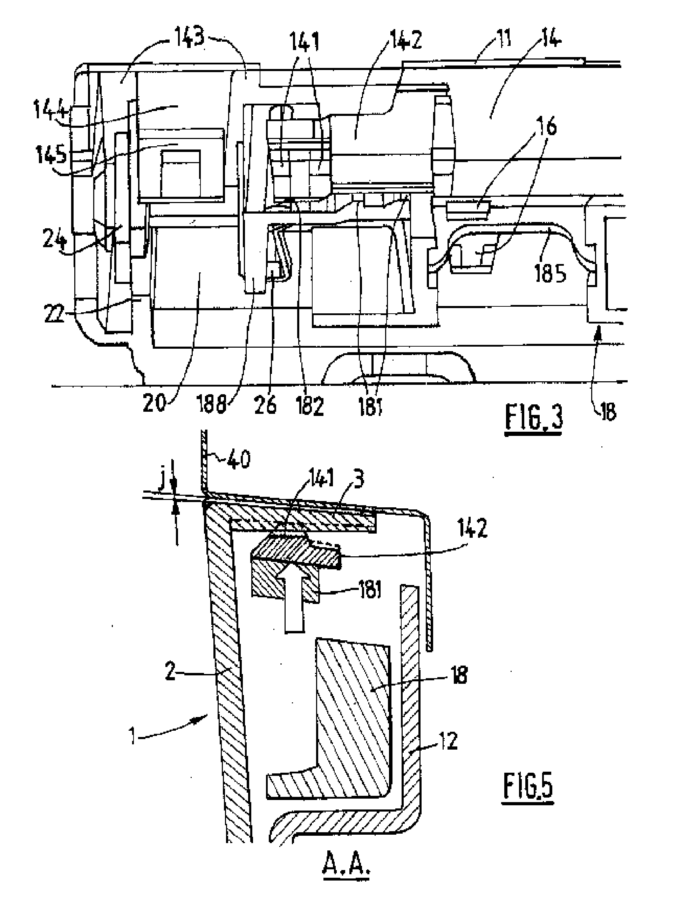

La figure 1 représente une pièce de fixation 10 d'un bouclier 1 à un élément de carrosserie d'un véhicule automobile (visible uniquement sur la figure 5).

La pièce de fixation 10 comprend une paroi 12 conformée pour épouser une paroi correspondante 2 du bouclier 1 et un rebord longitudinal 14 sur lequel est clippé un rebord 3 correspondant du bouclier 1.

Le rebord longitudinal 14 de la pièce de fixation 10 s'étend sensiblement perpendiculairement à la paroi 12, le long d'un bord longitudinal 11 de celle-ci. Autrement dit, ce rebord longitudinal 14 forme une extension partant sensiblement à angle droit de la paroi 12, et plus précisément d'un bord longitudinal 11 de celle-ci, vers l'intérieur du véhicule.

Le rebord longitudinal 14 comporte des protubérances 141 conformées pour venir en appui contre le bouclier 1 et plus précisément contre le rebord 3 du bouclier 1. Ces protubérances 141 sont situées sur des languettes 142 solidaires du rebord longitudinal 14. Ces languettes 142 s'étendent suivant une direction sensiblement parallèle au bord longitudinal 11 de la paroi 12, tel que visible sur la figure 3. De préférence, tel que visible sur la figure 3, chaque protubérance 141 est située à l'extrémité d'une languette 142, cette extrémité étant dirigée en direction de la position de blocage de l'élément coulissant 18 lequel est décrit plus en détail plus bas. Ainsi, lorsque l'élément coulissant 18 est déplacé d'une position de montage/démontage à une position de blocage, l'extrémité de la languette 142 ne risque pas de gêner son coulissement.

Le rebord longitudinal 14 comporte également des découpes 143 (visibles figure 3) définissant des languettes 144 comprenant chacune une saillie 145 conformée pour venir en prise avec un orifice 4 correspondant du bouclier 1 (visible figure 1). Dans l'exemple représenté, ces languettes 144 s'étendent suivant une direction sensiblement perpendiculaire au bord longitudinal 11 de la paroi 12, tel que visible sur la figure 3, cette direction correspondant à la direction d'accostage du bouclier 1 sur la pièce de fixation 10. De préférence, tel que visible sur la figure 3, chaque saillie 145 est située à l'extrémité d'une languette 144, cette extrémité étant distante de la paroi 12.

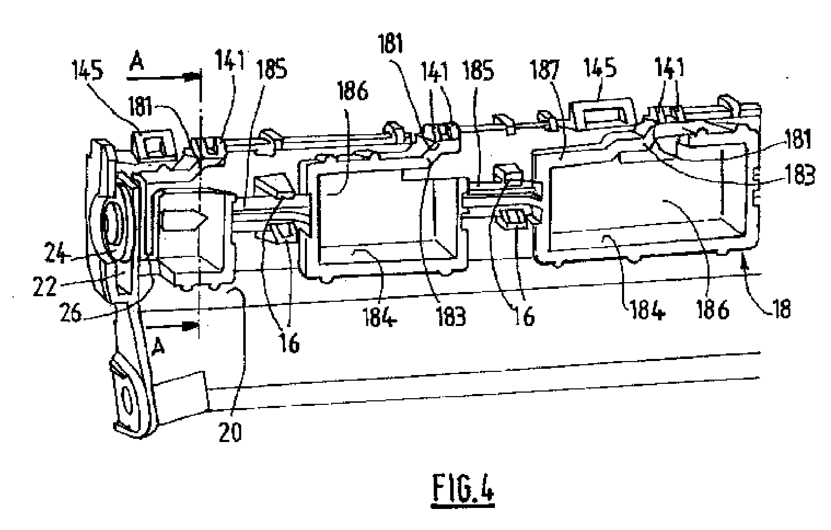

Un élément coulissant 18 est monté coulissant sur la paroi 12 de la pièce de fixation 10 suivant une direction parallèle au bord longitudinal 11 de la paroi 12. L'élément coulissant 18 est disposé sous le rebord longitudinal 14. Des éléments de maintien 16 solidaires de la paroi 12 maintiennent l'élément coulissant 18 de manière à ce qu'il puisse coulisser entre au moins deux positions prédéterminées, une position de montage/démontage de la pièce de fixation 10, correspondant à la position visible sur la figure 2 et une position de blocage de celle-ci (figure 4).

L'élément coulissant 18 comporte des butées 181 disposées en regard du rebord longitudinal 14, l'élément coulissant 18 et ses butées 181 étant agencés de sorte que, dans la position de blocage, les butées 181 soient situées sous les protubérances 141, en appui contre les languettes 142 supportant ces protubérances 141 afin d'exercer une pression sur ces dernières suivant une direction sensiblement perpendiculaire au rebord longitudinal 14.

En particulier, les butées 181 sont agencées de manière à déplacer les protubérances 141 du rebord longitudinal 14 d'une distance prédéterminée suivant une direction perpendiculaire au rebord lorsque l'élément coulissant 18 passe de la position de montage/démontage à la position de blocage. Cette distance prédéterminée correspond au jeu maximal pouvant exister entre le rebord 3 du bouclier 1 et l'élément de carrosserie adjacent suivant une direction perpendiculaire au rebord. Ce jeu j est représenté sur la figure 5. Il est généralement de 1 à 2 mm, mais peut être supérieur.

Ces butées 181 sont réparties sur toute la longueur du rebord longitudinal 14, de préférence régulièrement.

L'élément coulissant 18 comporte également des butées secondaires 182 disposées en regard du rebord longitudinal 14, l'élément coulissant 18 et les butées secondaires 182 étant agencés de sorte que, dans la position de blocage, les butées secondaires 182 soient situées sous les saillies 145 des languettes 144 du rebord longitudinal 14, en appui contre ces languettes 144, afin de bloquer tout déplacement ce celles-ci en direction de l'élément coulissant 18.

Les butées 181 et 182 de l'élément coulissant 18 sont situées sur des languettes 183 solidaires de l'élément coulissant 18, une même languette 183 comportant au moins une butée 181 et/ou au moins une butée secondaire 182.

Dans l'exemple représenté, l'élément coulissant 18 est formé d'une pluralité de caissons 184 de forme sensiblement parallélépipédique, reliés par des éléments de liaison rectilignes 185. Ces caissons 184 sont des caissons creux dont une face opposée à la face 186 en appui contre la paroi 12 est ouverte. Les languettes 183 sont formées par découpe de la paroi supérieure 187 de chaque caisson 184 (figure 4). Ces languettes 183 s'étendent parallèlement à la direction de coulissement de l'élément coulissant 18, leur extrémité étant dirigée vers la position de montage/démontage de l'élément coulissant 18, ce qui peut limiter les risques de blocage lors du coulissement de celui-ci de sa position de montage/démontage à sa position de blocage.

Les éléments de maintien 16 de la paroi 12 sont alors conformés pour maintenir chaque élément rectiligne 185 entre la position de montage/démontage et la position de blocage de l'élément coulissant 18. Ces éléments de maintien 16 se présentent ainsi sous la forme de mâchoires dans l'exemple représenté.

Dans l'exemple représenté, l'élément coulissant 18 est disposé sur une face de la paroi 12 destinée à être disposée contre la paroi 2 du bouclier 1. Afin que la paroi 12 puisse être plaquée contre la paroi 2 du bouclier 1, elle comporte une dépression 20 conformée pour loger entièrement l'élément coulissant 18, notamment quelque soit la position de ce dernier. Cette dépression 20 peut notamment participer au guidage de l'élément coulissant 18, cette dépression 20 étant fermée par la paroi 2 du bouclier 1 lorsque le bouclier 1 est fixé à la pièce de fixation 10. Cette dépression 20 peut être continue sur toute la longueur de l'élément coulissant 18 ou être discontinue, comme on peut le distinguer sur la figure 1, chaque caisson 184 de l'élément coulissant 18 étant alors reçu dans une portion de dépression 20 correspondante.

La pièce de fixation 10 comprend, sur un rebord latéral 22 sensiblement perpendiculaire à la paroi 12 et au rebord longitudinal 14, une vis 24 s'étendant parallèlement à la direction de déplacement de l'élément coulissant 18 et dont l'extrémité est engagée dans une partie formant écrou 26 solidaire de l'élément coulissant 18, de sorte que la rotation de la vis 24 provoque le coulissement de l'élément coulissant 18.

Dans l'exemple représenté, la vis 24 et la partie formant écrou 26 sont en métal. La vis 24 est une vis millimétrique et la partie formant écrou 26 est une agrafe clippée sur une paroi 188 du caisson 184 de l'élément coulissant 18 le plus proche de la vis (figures 3-4). La position et la longueur de la vis 24 sont déterminées de sorte que la vis 24 soit en butée contre l'élément coulissant 18 lorsque ce dernier est dans la position de blocage représentée figure 4.

La pièce de fixation 10 comprend également des moyens de fixation 28 pour sa fixation sur un élément de carrosserie adjacent (non représenté). Dans l'exemple, ces moyens de fixation 28 sont des orifices réalisés dans la paroi 12 pour une fixation par rivet pop (non représenté).

La pièce de fixation 10 peut également comprendre d'autres moyens de fixation 30 pour sa fixation au bouclier, tel que des orifices 30 pour une fixation par rivet, vis, ou analogue sur des parties correspondantes du bouclier 1 (figures 1-2).

Le montage de la pièce de fixation 10 et du bouclier 1 est maintenant décrit.

La pièce de fixation 10 est d'abord fixée sur l'élément de carrosserie 40 par des rivets pop traversant les orifices 28 de sa paroi 12.

Le bouclier 1 est ensuite approché de la pièce de fixation 10 suivant une direction sensiblement perpendiculaire à la paroi 12 de la pièce de fixation et le rebord 3 du bouclier est introduit entre le rebord longitudinal 14 de la pièce de fixation 10 et l'élément de carrosserie 40 adjacent jusqu'à ce que les saillies 145 de la pièce de fixation 10 traversent les orifices 4 correspondants du bouclier 1. Lors de cette phase d'accostage, l'élément coulissant 18 est dans la position de montage/démontage représentée figure 2.

Le bouclier 1 étant maintenu par clippage des saillies 145 de la pièce de fixation 10 dans ses orifices 4, l'élément coulissant 18 est ensuite déplacé de sa position de montage/démontage jusqu'à sa position de blocage représentée figure 4, par rotation de la vis 24 jusqu'à ce que celle-ci ne puisse plus tourner. Les butées 181 de l'élément coulissant 18 déplacent alors les languettes 142 portant les protubérances 141 suivant une direction sensiblement perpendiculaire au rebord longitudinal 14, en direction opposée à l'élément coulissant 18, tel que représenté sur la figure 5. De manière similaire, les butées secondaires 182 de l'élément coulissant 18 bloquent toute possibilité de mouvement vers l'élément coulissant 18 des languettes 144 portant les saillies 145, verrouillant ainsi le bouclier 1 sur la pièce de fixation 10. Le rebord 3 du bouclier 1 est alors maintenu fermement serré entre le rebord longitudinal 14 de la pièce de fixation 10 et l'élément de carrosserie 40 (figure 5).

Le bouclier 1 peut également être aisément démonté en déplaçant à nouveau l'élément coulissant 18 vers sa position de montage/démontage, puis, après avoir désengagé les saillies 145 de la pièce de fixation 10 des orifices 4 du bouclier 1, en exerçant une traction sur le bouclier 1 pour le dégager de la pièce de fixation 10.

## Revendications

1. Agencement comprenant une pièce de fixation (10) d'un bouclier (1) à un élément de carrosserie (40) d'un véhicule automobile, comprenant une paroi (12) conformée pour épouser une paroi correspondante (2) du bouclier (1) et un rebord longitudinal (14) s'étendant sensiblement perpendiculairement à la paroi (12) le long d'un bord longitudinal (11) de celle-ci et destiné à être solidarisé à un rebord (3) correspondant du bouclier (1), la pièce comprenant un élément coulissant (18) suivant une direction parallèle au bord longitudinal (11) de la paroi, cet élément coulissant (18) étant disposé sous le rebord longitudinal (14) et maintenu par des éléments de maintien (16) solidaires de la paroi (12) de manière à pouvoir coulisser entre au moins deux positions prédéterminées dont une position de montage et une position de blocage, l'élément coulissant (18) comportant des butées (181) disposées en regard du rebord longitudinal (14), le rebord longitudinal (14) comportant des protubérances (141) sur une face opposée à sa face située en regard de l'élément coulissant (18), en ce que l'élément coulissant (18) et les butées (181) sont agencés de sorte que :
- lorsque l'élément coulissant (18) est dans la position de blocage, les butées (181) soient situées sous le rebord longitudinal (14), en appui contre celui-ci et en dessous des protubérances (141) du rebord longitudinal (14),
- lorsque l'élément coulissant (18) passe de la position de montage à la position de blocage, les butées (181) de l'élément coulissant (18) déplacent le rebord longitudinal (14) et ses protubérances (141) d'une distance prédéterminée suivant une direction perpendiculaire au rebord longitudinal (14)
**caractérisé en ce que** l'élément coulissant (18) est formé d'une pluralité de caissons (184) de forme sensiblement parallélépipédique reliés par des éléments de liaison (185) rectilignes suffisamment souples pour admettre des variations de courbures du bord longitudinal (11) et **en ce que** les éléments de maintien (16) de la paroi sont conformés pour maintenir chaque élément rectiligne (185) entre lesdites au moins deux positions prédéterminées de l'élément coulissant.

2. Agencement selon la revendication 1, **caractérisé en ce que** les butées (141) sont réparties sur toute la longueur du rebord longitudinal (14).

3. Agencement selon l'une des revendications 1 ou 2, **caractérisé en ce que** l'intervalle entre deux butées (141) adjacentes est de 30 à 80mm.

4. Agencement selon l'une des revendications 1 à 3, **caractérisé en ce que** les protubérances (141) sont situées sur des languettes (142) solidaires du rebord longitudinal (14).

5. Agencement selon l'une des revendications 1 à 4, **caractérisé en ce que** le rebord longitudinal (14) comporte des découpes (143) définissant des languettes (144) comprenant au moins une saillie (145) conformée pour venir en prise avec un orifice (4) correspondant du bouclier (1) et **en ce que** l'élément coulissant (18) comporte des butées secondaires (182) disposées en regard du rebord longitudinal (14), l'élément coulissant (18) et les butées secondaires (182) étant agencés de sorte que, dans la position de blocage, les butées secondaires (182) soient situées sous les languettes (144) du rebord longitudinal (14) équipées de saillies (145), en appui contre ces languettes (144), afin de bloquer tout déplacement de ces languettes (144) en direction de l'élément coulissant (18).

6. Agencement selon l'une des revendications 1 à 5, **caractérisé en ce que** les butées (181, 182) de l'élément coulissant sont situées sur des languettes (183) solidaires de l'élément coulissant (18).

7. Agencement selon l'une des revendications 1 à 6, **caractérisé en ce que** la paroi (12) comporte au moins une dépression (20) conformée pour loger l'élément coulissant (18).

8. Agencement selon l'une des revendications 1 à 7, **caractérisé en ce qu'**elle comprend, sur un rebord latéral (22) sensiblement perpendiculaire à la paroi (12) et sensiblement perpendiculaire au rebord longitudinal (14), une vis (24) s'étendant parallèlement à la direction de déplacement de l'élément coulissant (18) et dont l'extrémité est engagée dans une partie formant écrou (26) solidaire de l'élément coulissant (18), de sorte que la rotation de la vis (24) provoque le coulissement de l'élément coulissant (18).

9. Agencement selon la revendication 8, **caractérisé en ce que** la vis (24) et la partie formant écrou (26) sont en métal.

## Patentansprüche

1. Anordnung, die ein Befestigungsbauteil (10) eines Stoßfängers (1) an einem Karosserieelement (40) eines Kraftfahrzeugs enthält, das eine Wand (12), die gestaltet ist, um sich an eine entsprechende Wand (2) des Stoßfängers (1) anzupassen, und eine Längsrandleiste (14) enthält, die sich im Wesentlichen lotrecht zur Wand (12) entlang eines Längsrands (11) von dieser erstreckt und dazu bestimmt ist, fest mit einer entsprechenden Randleiste (3) des Stoßfängers (1) verbunden zu werden, wobei das Bauteil ein gemäß einer Richtung parallel zum Längsrand (11) der Wand gleitendes Element (18) enthält, wobei dieses gleitende Element (18) unter der Längsrandleiste (14) angeordnet ist und von fest mit der Wand (12) verbundenen Halteelementen (16) gehalten wird, um zwischen mindestens zwei vorbestimmten Stellungen gleiten zu können, darunter eine Montagestellung und eine Blockierstellung, wobei das gleitende Element (18) Anschläge (181) aufweist, die gegenüber der Längsrandleiste (14) angeordnet sind, wobei die Längsrandleiste (14) Vorwölbungen (141) auf einer der Seite gegenüberliegenden Seite aufweist, die sich vor dem gleitenden Element (18) befindet, dass das gleitende Element (18) und die Anschläge (181) so angeordnet sind, dass:
- wenn das gleitende Element (18) in der Blockierstellung ist, die Anschläge (181) sich unter der Längsrandleiste (14) in Auflage gegen diese und unter den Vorwölbungen (141) der Längsrandleiste (14) befinden,
- wenn das gleitende Element (18) von der Montagestellung in die Blockierstellung übergeht, die Anschläge (181) des gleitenden Elements (18) die Längsrandleiste (14) und ihre Vorwölbungen (141) um eine vorbestimmte Strecke gemäß einer Richtung lotrecht zur Längsrandleiste (14) verschieben,
**dadurch gekennzeichnet, dass** das gleitende Element (18) von einer Vielzahl von Kästen (184) mit im Wesentlichen parallelepipedischer Form gebildet wird, die durch geradlinige Verbindungselemente (185) verbunden sind, welche elastisch genug sind, um Änderungen von Krümmungen des Längsrands (11) zuzulassen, und dass die Halteelemente (16) der Wand so gestaltet sind, dass sie jedes geradlinige Element (185) zwischen den mindestens zwei vorbestimmten Stellungen des gleitenden Elements halten.

2. Anordnung nach Anspruch 1, **dadurch gekennzeichnet, dass** die Anschläge (141) über die ganze Länge der Längsrandleiste (14) verteilt sind.

3. Anordnung nach einem der Ansprüche 1 oder 2, **dadurch gekennzeichnet, dass** der Zwischenraum zwischen zwei benachbarten Anschlägen (141) zwischen 30 und 80 mm liegt.

4. Anordnung nach einem der Ansprüche 1 bis 3, **dadurch gekennzeichnet, dass** die Vorwölbungen (141) sich auf fest mit der Längsrandleiste (14) verbundenen Zungen (142) befinden.

5. Anordnung nach einem der Ansprüche 1 bis 4, **dadurch gekennzeichnet, dass** die Längsrandleiste (14) Ausschnitte (143) aufweist, die Zungen (144) definieren, welche mindestens einen Vorsprung (145) aufweisen, der gestaltet ist, um mit einer entsprechenden Öffnung (4) des Stoßfängers (1) in Eingriff zu kommen, und dass das gleitende Element (18) sekundäre Anschläge (182) aufweist, die gegenüber der Längsrandleiste (14) angeordnet sind, wobei das gleitende Element (18) und die sekundären Anschläge (182) so angeordnet sind, dass in der Blockierstellung die sekundären Anschläge (182) sich unter den Zungen (144) der Längsrandleiste (14) befinden, die mit Vorsprüngen (145) versehen sind, in Auflage gegen diese Zungen (144), um jede Verschiebung dieser Zungen (144) in Richtung des gleitenden Elements (18) zu blockieren.

6. Anordnung nach einem der Ansprüche 1 bis 5, **dadurch gekennzeichnet, dass** die Anschläge (181, 182) des gleitenden Elements sich auf Zungen (183) befinden, die fest mit dem gleitenden Element (18) verbunden sind.

7. Anordnung nach einem der Ansprüche 1 bis 6, **dadurch gekennzeichnet, dass** die Wand (12) mindestens eine Vertiefung (20) aufweist, die gestaltet ist, um das gleitende Element (18) aufzunehmen.

8. Anordnung nach einem der Ansprüche 1 bis 7, **dadurch gekennzeichnet, dass** sie auf einer Seitenrandleiste (22) im Wesentlichen lotrecht zur Wand (12) und im Wesentlichen lotrecht zur Längsrandleiste (14) eine Schraube (24) enthält, die sich parallel zur Verschieberichtung des gleitenden Elements (18) erstreckt und von der ein Ende in einen eine Mutter (26) bildenden Teil eingeführt ist, der fest mit dem gleitenden Element (18) verbunden ist, so dass die Drehung der Schraube (24) das Gleiten des gleitenden Elements (18) bewirkt.

9. Anordnung nach Anspruch 8, **dadurch gekennzeichnet, dass** die Schraube (24) und der eine Mutter (26) bildende Teil aus Metall sind.

## Claims

1. Arrangement comprising a part (10) for fastening a bumper (1) to a body element (40) of a motor vehicle, comprising a wall (12) configured to hug a corresponding wall (2) of the bumper (1) and a longitudinal rim (14) extending substantially perpendicularly to the wall (12) along a longitudinal edge (11) of the latter and intended to be secured to a corresponding rim (3) of the bumper (1), the part comprising an element (18) sliding in a direction parallel to the longitudinal edge (11) of the wall, this sliding element (18) being arranged below the longitudinal rim (14) and retained by retaining elements (16) secured to the wall (12) so as to be able to slide between at least two predetermined positions, namely a mounting position and a blocking position, the sliding element (18) comprising abutments (181) arranged opposite the longitudinal rim (14), the longitudinal rim (14) comprising protuberances (141) on a face opposed to its face situated opposite the sliding element (18), in that the sliding element (18) and the abutments (181) are arranged such that:
- when the sliding element (18) is in the blocking position, the abutments (181) are situated below the longitudinal rim (14), bearing against the latter and beneath the protuberances (141) of the longitudinal rim (14),
- when the sliding element (18) passes from the mounting position to the blocking position, the abutments (181) of the sliding element (18) move the longitudinal rim (14) and its protuberances (141) by a predetermined distance in a direction perpendicular to the longitudinal rim (14), **characterized in that** the sliding element (18) is formed by a plurality of box structures (184) of substantially parallelepipedal shape connected by rectilinear connection elements (185) sufficiently flexible to allow for variation in curvatures of the longitudinal edge (11) and **in that** the retaining elements (16) of the wall are configured to retain each rectilinear element (185) between the said at least two predetermined positions of the sliding element.

2. Arrangement according to Claim 1 **characterized in that** the abutments (141) are distributed over the entire length of the longitudinal rim (14).

3. Arrangement according to either of Claims 1 and 2, **characterized in that** the spacing between two adjacent abutments (141) is from 30 to 80 mm.

4. Arrangement according to one of Claims 1 to 3, **characterized in that** the protuberances (141) are situated on tongues (142) secured to the longitudinal rim (14).

5. Arrangement according to one of Claims 1 to 4, **characterized in that** the longitudinal rim (14) comprises cutouts (143) defining tongues (144) comprising at least one projection (145) configured to engage with a corresponding orifice (4) in the bumper (1) and **in that** the sliding element (18) comprises secondary abutments (182) arranged opposite the longitudinal rim (14), the sliding element (18) and the secondary abutments (182) being arranged such that, in the blocking position, the secondary abutments (182) are situated below the tongues (144) of the longitudinal rim (14) equipped with projections (145), bearing against these tongues (144), in order to block any movement of these tongues (144) in the direction of the sliding element (18).

6. Arrangement according to one of Claims 1 to 5, **characterized in that** the abutments (181, 182) of the sliding element are situated on tongues (183) secured to the sliding element (18).

7. Arrangement according to one of Claims 1 to 6, **characterized in that** the wall (12) comprises at least one depression (20) configured to house the sliding element (18).

8. Arrangement according to one of Claims 1 to 7, **characterized in that** it comprises, on a lateral rim (22) substantially perpendicular to the wall (12) and substantially perpendicular to the longitudinal rim (14), a screw (24) extending parallel to the direction of movement of the sliding element (18) and of which the end is engaged in a nut-forming part (26) secured to the sliding element (18), with the result that the rotation of the screw (24) causes the sliding element (18) to slide.

9. Arrangement according to Claim 8, **characterized in that** the screw (24) and the nut-forming part (26) are made of metal.
